# EUROPÄISCHE PATENTSCHRIFT

(11) **EP 3 984 907 B1**
(45) Veröffentlichungstag und Bekanntmachung des Hinweises auf die Patenterteilung: **09.08.2023**
(21) Anmeldenummer: 21197026.4
(22) Anmeldetag: 16.09.2021
(51) Int. Cl.: B65D 81/05, B60P 7/06

(54) **VORRICHTUNG ZUM SCHUTZ VON LADUNG**
DEVICE FOR PROTECTING A FREIGHT
DISPOSITF POUR LA PROTECTION DE CARGAISON

(30) Priorität: 19.10.2020 DE 102020127489
(43) Veröffentlichungstag der Anmeldung: 20.04.2022
(73) Patentinhaber: Grönheit & Weigel GmbH, 47918 Tönisvorst (DE)
(72) Erfinder: Grönheit, Ralf, 47918 Tönisvorst (DE)
(74) Vertreter: Frese Patent PartGmbB

(56) Entgegenhaltungen:
- EP-A1- 0 978 461
- US-E- R E27 787

## Beschreibung

Die Erfindung betrifft eine Vorrichtung zum Schutz von Ladung gegen Verrutschen und/oder Kippen mit einem aufblasbaren Innensack, der über ein Ventil befüllbar beziehungsweise entleerbar und ansonsten dicht ist, und einem Außensack, der eng an dem Innensack anliegt und der Vorrichtung eine ausreichende Stabilität gegen Platzen und mechanische Beschädigung verleiht, wobei der Innensack aus mindestens einem Abschnitt einer Schlauchfolie aus Kunststoff gefertigt ist.

Solche Vorrichtungen zum Schutz von Ladung, die auch Stausäcke genannt werden, sind an sich bekannt und werden zur Ladungssicherung von Transportgütern z.B. in Kisten, Containern sowie in Laderäumen von Lastkraftwagen, Waggons und Schiffen eingesetzt. Hierfür werden die leeren Stausäcke in zwischen den verladenen Transportgütern gebildeten Hohlräumen eingeführt und dann mit vorbestimmtem Druck so aufgeblasen, dass sie eng an den Transportgütern anliegen. Die Transportgüter sind meistens zusätzlich wie üblich z.B. mittels Spanngurten gesichert.

Bei den bisher bekannten Vorrichtungen ist der Innensack aus einer Schlauchfolie gefertigt, deren Materialstärke mindestens 100 µm beträgt. Diese relativ große Materialstärke ist erforderlich, damit eine ausreichende Dichtheit des Innensacks gewährleistet ist. Bei geringeren Materialstärken kann nicht ausgeschlossen werden, dass unregelmäßig wiederkehrende Schwachstellen auftreten, die undicht sind oder bei Belastung dazu führen. Daher könnten die Folien mit geringerer Materialstärke nur dann verwendet werden, wenn jede einzelne Vorrichtung aufwändig auf Dichtheit geprüft wird. Dies würde die Kosten erheblich verteuern, so dass ihre Verwendung unwirtschaftlich ist.

Aus der EP 0 978 461 A1 ist ein Stausack bekannt, bei dem ein Innensack aus einer luftdichten Folie und mindestens einer Papierschicht gebildet ist. Ein Außensack ist aus mindestens einer Papierschicht gebildet. Der Stausack ist aufwändig herzustellen und relativ schwergewichtig.

Die GB 2 267 466 A offenbart einen Stausack, bei dem ein Außensack aus einem rundgewebten Material besteht. Hierdurch werden Längsnähte vermieden, was die mechanische Stabilität des Stausacks gegen Reißen oder Platzen verbessern soll.

Die WO 2020/153914 A1 beschreibt einen durch ein Klebeband verstärkten Stausack.

Aus der DE 693 07 286 T2 ist ein Stausack (Luftkissen) bekannt, der aus einer Vielzahl von getrennten, aufblasbaren Innensäcken besteht, die gemeinsam von einem dehnbaren Außensack (Behälter 26) umschlossen sind. Dieser Stausack ist besonders zur Sicherung von Rollen geeignet.

Die DE 10 2004 018 194 A1 beschreibt einen Stausack mit einem Außensack und einem mit Gas aufblasbaren Innensack. Der Innensack weist - vorzugsweise an seiner Innenseite, also der dem Gas zugewandten Seite, - eine Beschichtung auf. Hierdurch soll eine Sicherheit gegen Undichtigkeit durch mechanische Belastung erhöht werden. Der Stausack ist aufwendig und entsprechend teuer zu fertigen.

Es ist die Aufgabe der Erfindung, einen Stausack zu schaffen, bei dem ein Innensack bei gleichbleibender Qualität gegenüber den bekannten Stausäcken, insbesondere bei unverminderter Dichtheit, mit geringerem Materialaufwand gefertigt ist.

Die Aufgabe ist durch die Merkmale des Anspruchs 1 gelöst. Der Innensack ist aus zwei ineinander oder übereinander gelegten Abschnitten einer Schlauchfolie gefertigt, wobei eine Dicke des Folienmaterials 40 µm oder weniger beträgt. Bevorzugt beträgt die Dicke maximal 25 µm. Damit kann der Materialverbrauch für den Innensack um mindestens 20 % reduziert werden, was zu entsprechender Einsparung bei den Materialkosten und verbesserter Ökologie der Stausäcke insgesamt führt. Hierbei wird die technische Gebrauchsfähigkeit der Stausäcke nicht verschlechtert; die Dichtheit ist gewährleistet. Die Erfindung macht sich die Erkenntnis zunutze, dass immer vorhandene Schwachstellen der dünnen Folie relativ selten und unregelmäßig auftreten. Durch die zwei in- oder übereinander gelegten Schlauchfolien und das zumindest zweiseitige Verschweißen entsteht ein doppelwandiger Innensack; sollte an einem inneren Teil einer der Schlauchfolien des fertigen Innensacks eine Schwachstelle vorhanden sein, wird austretende Luft durch den äußeren Teil aufgefangen, so das der Stausack insgesamt dicht ist.

Ein Ventil kann wie üblich dicht an einer vorbestimmten Stelle des Stausacks eingeschweißt werden, wobei gleichzeitig die beiden zugeordneten Bereiche der Lagen um das Ventil herum gegeneinander abgedichtet werden.

Zumindest die beiden offenen Seiten der Schlauchfolien werden dicht miteinander verschweißt.

Die Unteransprüche betreffen die vorteilhafte Ausgestaltung der Erfindung.

In einer Ausgestaltung besteht der Innensack aus zwei übereinander gelegten Schlauchfolien und ist an allen vier Seiten verschweißt. Dies erleichtert das Einschweißen des Ventils. Weiterhin sind die beim Herstellen und Aufwickeln gebildeten Längsseiten der Schlauchfolienbahn, die wegen der scharfen Knickung häufiger die Schwachstellen aufweisen als die Flächen dieser Bahn, wegen der Schweißnähte außerhalb des Bereichs des Innensacks, der dicht sein muss. Damit ist die Sicherheit gegen Undichtigkeit weiter erhöht.

In einer weiteren Ausgestaltung sind die Schlauchfolien als Mehrschichtfolien gefertigt. Hierdurch ist eine hohe Stabilität bei gleichzeitig guter Verschweißbarkeit gewährleistet.

Bevorzugt sind die Schichten der Mehrschichtfolie mittel dichtes Polyethylen (MDPE), Metallocen Polyethylen (PE-m) und Lineares Polyethylen niederer Dichte (LLDPE).

In einer weiteren Ausgestaltung ist der Außensack als Bändchengewebe aus Polypropylen und alternativ aus Kraftpapier gefertigt. Diese Materialien geben dem Stausack eine hohe mechanische Stabilität und haben sich in der Praxis bereits bewährt.

Die Erfindung wird nachfolgend anhand der schematischen Zeichnung weiter erläutert. Es zeigen in unterschiedlichen Maßstäben
Figur 1 einen Querschnitt durch einen Stausack ohne Luftfüllung
Figur 2 eine Draufsicht auf einen Innensack der Figur 1 und
Figur 3 den Querschnitt der Figur 1 mit Luftfüllung.

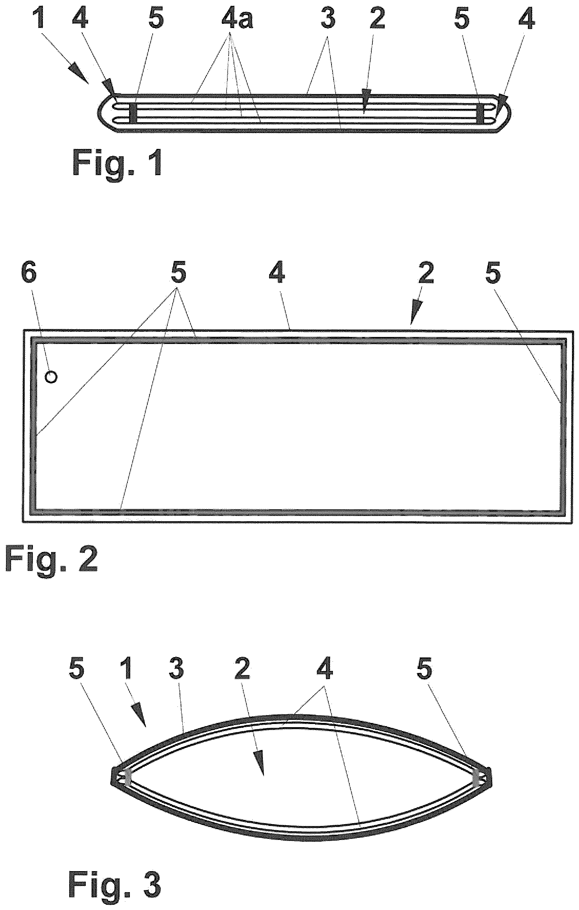

Wie aus den Figuren 1 bis 3 ersichtlich, ist eine Vorrichtung 1 zum Schutz von Ladung gegen Verrutschen und/oder Kippen, die auch als Stausack 1 bekannt ist, aus einem Innensack 2 und einem Außensack 3 gebildet.

Der Innensack 2 besteht hier aus zwei weitgehend deckungsgleich übereinander gelegten Abschnitten einer Schlauchfolie 4, so dass er übereinander gelegt aus insgesamt vier Lagen 4a und als Innensack 2 zweilagig gefertigt ist. Die Lagen 4a sind in den Figuren zur Verdeutlichung mit einem Abstand dargestellt, der praktisch nicht vorhanden ist. Die beiden Abschnitte der Schlauchfolie 4 und damit auch alle vier Lagen 4a sind, wie in der Figur 2 gezeigt, in Randbereichen der Abschnitte mittels Schweißnähten 5 miteinander verbunden. Die Schweißnähte 5 erstrecken sich parallel zu Längs- und Breitseiten der Abschnitte und bilden insgesamt ein Rechteck. Hierdurch ist der Innensack 2 luftdicht gebildet.

Die Schlauchfolie 4 ist als Mehrschichtfolie aus MDPE, PE-m und LLDPE geformt. Sie weist eine Dicke jeder ihrer Lagen 4a (Materialstärke) von weniger als 40 µm auf, bevorzugt 15 µm bis 25 µm.

An einem der Abschnitte der Schlauchfolie 4 ist ein Ventil 6 z.B. durch Schweißen luftdicht so befestigt, dass beide Lagen 4a der Schlauchfolie 4 von einem Ventilkörper durchdrungen sind. Das Ventil 6 ist bei dem Innensack 2 innerhalb der Schweißnaht 5 an einer vorbestimmten Position angeordnet, wobei die Position je nach Verwendungszweck des Stausacks 1 unterschiedlich sein kann. Damit ist der Innensack 2 und daher auch der Stausack 1 insgesamt aufblasbar. Nach der Figur 2 ist das Ventil hier im Bereich einer Breitseite des Innensacks 2 angeordnet.

Alternativ zur Anordnung übereinander sind die Abschnitte der Schlauchfolie 4 ineinander gelegt, das heißt, ein erster der Abschnitte ist in einen zweiten der Abschnitte eingezogen (nicht gezeigt). Das Ventil 5 durchdringt hier eine der Lagen 4a jedes der Abschnitte. Die Schweißnähte 5 parallel zu den Längsseiten der Abschnitte sind hierbei nicht zwingend erforderlich, vermeiden aber das Risiko von Undichtigkeit im Bereich der Knickung.

Um den Innensack 2 herum ist der Außensack 3 so angeordnet, dass er sich eng an den Innensack 2 anschmiegt. Im Bereich des Ventils 6 weist der Außensack 3 eine Aussparung entsprechend der Kontur des Ventilkörpers auf, so dass dieser aus der Aussparung herausragen kann.

Der Außensack 3 ist vorzugsweise als Schlauch aus Bändchen rund gewebt, die z.B. aus Polypropylen gefertigt sind. Offene Enden eines Abschnitts des Bändchengewebe-Schlauchs sind wie bekannt mittels einer Nähnaht verschlossen.

Alternativ ist der Außensack 3 aus Kraftpapier gefertigt, das durch Verkleben an freien beziehungsweise offenen Enden zur Sackform verklebt ist.

Der Stausack 1 wird wie folgt hergestellt. Von einer Bahn einer Schlauchfolie 4 werden zwei gleich große Abschnitte abgetrennt.

Aus einem der Abschnitte wird eine erste Aussparung an einer vorbestimmten Stelle gestanzt: In die Aussparung wird das Ventil 6 eingesetzt und in einem Bereich um die erste Aussparung dicht mit dem Abschnitt der Schlauchfolie 4 verschweißt. Damit sind auch die beiden einzelnen Lagen 4a in diesem Bereich gegeneinander dicht.

Die beiden Abschnitte der Schlauchfolie 4 werden deckungsgleich übereinander gelegt, wobei eine Füllöffnung des Ventils 6 nach außen herausragt. Die beiden Abschnitte werden in Bereichen parallel zu den Seiten dicht verschweißt, so dass die Schweißnähte 5 als Rechteck angeordnet gebildet werden.

Damit ist der Innensack 2 fertig.

Dieser wird in den Abschnitt des Bändchengewebe-Schlauchs eingezogen, wobei die Füllöffnung des Ventils 6 von innen durch die vorher passend angeordnet eingelassene zweite Aussparung gesteckt wird. Offene Seiten des Abschnitts werden mit einer Nähmaschine verschlossen, so dass der Außensack 3 mit dem darin befindlichen Innensack 2 und somit die fertige Vorrichtung 1 zum Sichern von Ladung, also der Stausack 1, gebildet ist.

Größen des Innensacks 2 und des Außensacks 3 sind so aufeinander abgestimmt, dass sich im Gebrauch beide unmittelbar berühren. Aus Gründen der Deutlichkeit ist dies in den Figuren anders dargestellt, wo die Lagen 4a einerseits und der Innensack 2 und der Außensack 3 andererseits mit gegenseitigem Abstand gezeigt sind, der tatsächlich nicht vorhanden ist.

### Bezugszeichenliste

- 1: Vorrichtung
- 2: Innensack
- 3: Außensack
- 4: Schlauchfolie
- 4a: Lage
- 5: Schweißnaht
- 6: Ventil

## Patentansprüche

1. Vorrichtung (1) zum Schutz von Ladung gegen Verrutschen und/oder Kippen (1) mit
einem aufblasbaren Innensack (2), der über ein Ventil (6) befüllbar beziehungsweise entleerbar und ansonsten dicht ist, und
einem Außensack (3), der eng an dem Innensack (2) anliegt und der Vorrichtung eine ausreichende Stabilität gegen Platzen und mechanische Beschädigung verleiht,
wobei der Innensack (2) aus mindestens einem Abschnitt einer Schlauchfolie (4) aus Kunststoff gefertigt ist,
**dadurch gekennzeichnet, dass** der Innensack (2) aus zwei ineinander oder übereinander gelegten Abschnitten der Schlauchfolie (4) gefertigt ist, wobei eine Dicke des Folienmaterials 40 µm oder weniger beträgt.

2. Vorrichtung nach Anspruch 1, **dadurch gekennzeichnet, dass** der Innensack (2) aus zwei übereinander gelegten Schlauchfolien (4) besteht und an allen vier Seiten verschweißt ist.

3. Vorrichtung nach Anspruch 1 oder 2, **dadurch gekennzeichnet, dass** die Schlauchfolien (2) als Mehrschichtfolien gefertigt sind.

4. Vorrichtung nach Anspruch 3, **dadurch gekennzeichnet, dass** die Schlauchfolien (2) aus MDPE, PE-m und LLDPE gefertigt sind.

5. Vorrichtung nach einem der Ansprüche 1 bis 4, **dadurch gekennzeichnet, dass** der Außensack (3) als Bändchengewebe aus Polypropylen gefertigt ist.

6. Vorrichtung nach einem der Ansprüche 1 bis 4, **dadurch gekennzeichnet, dass** der Außensack (3) aus Kraftpapier gefertigt ist.

## Claims

1. Device (1) for protecting freight against slipping and/or tipping (1), having
an inflatable inner bag (2), which can be filled and emptied via a valve (6) and is otherwise airtight, and
an outer bag (3), which fits closely to the inner bag (2) and provides the device with sufficient stability against bursting and mechanical damage,
wherein the inner bag (2) is made of at least one section of a tubular film (4) of plastic,
**characterized in that** the inner bag (2) is made of two sections of the tubular film (4) laid inside one another or on top of one another, wherein a thickness of the film material is 40 µm or less.

2. Device according to Claim 1, **characterized in that** the inner bag (2) consists of two tubular films (4) laid on top of one another and is welded on all four sides.

3. Device according to Claim 1 or 2, **characterized in that** the tubular films (2) are made of multilayer films.

4. Device according to Claim 3, **characterized in that** the tubular films (2) are made of MDPE, PE-m and LLDPE.

5. Device according to one of Claims 1 to 4, **characterized in that** the outer bag (3) is made as a ribbon fabric of polypropylene.

6. Device according to one of Claims 1 to 4, **characterized in that** the outer bag (3) is made of kraft paper.

## Revendications

1. Dispositif (1) de protection de la charge contre le glissement et/ou le basculement (1), avec
un sac intérieur gonflable (2) qui peut être rempli ou dégonflé au moyen d'une valve (6) et qui est par ailleurs étanche, et
un sac extérieur (3) qui s'applique étroitement contre le sac intérieur (2) et confère au dispositif une stabilité suffisante contre l'éclatement et les dommages mécaniques,
dans lequel le sac intérieur (2) est fabriqué à partir d'au moins une section d'un film tubulaire (4) en matière plastique,
**caractérisé en ce que** le sac intérieur (2) est fabriqué à partir de deux sections du film tubulaire (4) placées l'une dans l'autre ou l'une sur l'autre, dans lequel une épaisseur du matériau de film est de 40 µm ou moins.

2. Dispositif selon la revendication 1, **caractérisé en ce que** le sac intérieur (2) est constitué de deux films tubulaires (4) superposés et est soudé sur les quatre côtés.

3. Dispositif selon la revendication 1 ou 2, **caractérisé en ce que** les films tubulaires (2) sont fabriqués sous forme de films multicouches.

4. Dispositif selon la revendication 3, **caractérisé en ce que** les films tubulaires (2) sont fabriqués en MDPE, PE-m et LLDPE.

5. Dispositif selon l'une quelconque des revendications 1 à 4, **caractérisé en ce que** le sac extérieur (3) est fabriqué sous forme de tissu à bandelettes en polypropylène.

6. Dispositif selon l'une quelconque des revendications 1 à 4, **caractérisé en ce que** le sac extérieur (3) est fabriqué en papier kraft.
